# EUROPEAN PATENT APPLICATION

(11) **EP 3 200 169 A1**
(43) Date of publication of application: **02.08.2017**
(21) Application number: 17150920.1
(22) Date of filing: 11.01.2017
(51) Int. Cl.: G08G 1/00

(54) **METHOD AND CONTROL UNIT IN A GROUP OF COORDINATED VEHICLES**

(30) Priority: 27.01.2016 SE 1650093
(71) Applicant: Scania CV AB, 151 87 Södertälje (SE)
(72) Inventor: CLAESSON, André, 146 38 Tullinge (SE)
(74) Representative: Scania CV AB

(57) **Abstract**

Method (400) and control unit (210) for keeping distances (t₁, t₂) between vehicles (100-1, 100-2, 100-3) in a group (110) of coordinated vehicles (100-1, 100-2, 100-3) within a distance interval (to -tₘₐₓ). The method (400) comprises:
transmitting (401) a request for vehicle related information;
receiving (402) the requested vehicle related information from the vehicles (100-1, 100-2, 100-3) in the group (110);
determining (403) a maximum allowed velocity/ acceleration/ retardation of the vehicles (100-1, 100-2, 100-3) in the group (110), based on the vehicle related information received (402) from each vehicle (100-1, 100-2, 100-3) in the group (110), in order to keep the distances (t₁, t₂) between the vehicles (100-1, 100-2, 100-3) in the group (110) within a distance interval (to -tₘₐₓ); and
instructing (404) each vehicle (100-1, 100-2, 100-3) in the group (110) not to exceed the determined (403) maximum allowed velocity/ acceleration/ retardation.

## Description

### TECHNICAL FIELD

This document discloses a control unit and a method in a control unit. More particularly, a method and a control unit is provided, for keeping distances between vehicles in a group of coordinated vehicles within a distance interval.

### BACKGROUND

An emerging technology is to drive vehicles such as e.g. busses, in groups of coordinated vehicles, or vehicle trains. This technology is sometimes referred to as Bus Rapid Transit (BRT). BRT is a bus-based mass transit system, which may be regarded upon as a "surface subway", which aims at combining the capacity and speed of a subway with the flexibility, lower cost and simplicity of a bus system.

In some BRT concepts, a ring line in a city centre may have a group of coordinated vehicles running on the same traffic line in order to increase the transportation capacity, e.g. under rush hours.

In some other concepts, the groups of coordinated vehicles may be starting individually from different suburbans, join in a common vehicle train when arriving at the city centre and then drive jointly similar to tram wagons through the city centre, thereby providing high transportation capacity within the city centre. The group of coordinated vehicles may then split up and continue to different end destinations. Thereby a high capacity transportation system is provided, which is flexible and adaptable to time varying demands.

When the vehicles are coordinated and are driving jointly in a vehicle train, communication may be made between the vehicles by vehicle-to-vehicle (V2V) communication. Thereby, information may be sent from the first vehicle to the other following vehicles e.g. when the first vehicle brakes. Also other driving commands such as acceleration or turning may be transmitted from the first vehicle to the other vehicles in the group. Thereby, the driver of the first vehicle in the coordinated group may effectually drive all of the vehicles in the coordinated group of vehicles, making the other drivers redundant, much like how a tram driver is able to drive a tram train comprising several wagons. This makes it possible to transport an increased amount of passengers per required driver. Alternatively, the drivers of the follower vehicles in the coordinated group may take a paus from the driving and for example control ticket validity of the passengers etc. In a further alternative, none of the vehicles in the coordinated group may require any driver.

However, the different vehicles in the coordinated set of vehicles may have different characteristics and capacity in terms of engine power, weight, brakes etc., which makes it difficult to constantly keep a short distance between the vehicles.

In case of e.g. an acceleration of the BRT train where the first vehicle can accelerate faster than the trailing vehicles, an increased distance will emerge between the first vehicle and the trailing vehicles.

Further, some other road user may occupy the emerged gap, which is a traffic safety problem. It also becomes confusing for the waiting passengers, who cannot know if it is one BRT train coming, or two different BRT trains with an intermediate vehicle in between.

In case of retardation when the first vehicle has better braking capacity than the other vehicles, there is a risk of collision between the coordinated vehicles of the BRT train.

Also in case all the vehicles in the BRT train are identical, having the same engine power and braking capacity, there may be a different amount of passengers on the different vehicles, which gives different weight to the vehicles. Further, a vehicle having standing passengers, or passengers in wheelchair, baby carriage etc. may not be able to brake as aggressively as an empty vehicle, or a vehicle with only seated and/ or belted passengers.

In a Master Thesis "A study on platoon formations and reliable communication in vehicle platoons" by L.H.X. Hobert, longitudinal control of a vehicle train is discussed. The importance of keeping the distance between the vehicles constant is mentioned, it is however not further described or suggested how this may be made.

Document WO2014133425 describes a method for keeping a distance between vehicles in a vehicle train. However, the purpose is to reduce air resistance when driving trucks in high velocity in platoons by keeping the vehicles at the most favourable distance in this aspect. No communication or exchange of information between the vehicles in the platoon is made. Further the method is not conceived for public transport and the specific problems appearing in urban driving with intermediate vehicles, or with standing passengers in the vehicles etc.

Document WO2013147684 concerns a vehicle train comprising a plurality of vehicles, wherein communication is made between the involved vehicles. Different parameters such as available map data, weather etc., for optimising the distances between the vehicles in the platoon for reducing fuel consumption. However, no consideration is made concerning the capacities of the vehicles in order to adjust the distances between the vehicles.

All the above mentioned solutions are directed towards classical vehicle platoons, for deducing fuel consumption of the vehicles in the platoon. Further, as such solutions are directed towards platoons of trucks, driving close in high speed on highways for saving fuel by reducing air drag, they are not applicable for vehicle groups dedicated for public transport in low speed in urban environment. A vehicle with passengers, unlike trucks, has to stop and/ or accelerate with great care for avoiding accidents and discomfort of the passengers. There may for example be standing passengers in the vehicle, or children and/ or disabled passengers, why rapid acceleration often is very inappropriate or even dangerous for such passengers.

Furthermore, in a conventional vehicle platoon all vehicles always have a driver present in each vehicle. In the described group of coordinated vehicles, there may not be any driver at all in at least some of the vehicles in the group of coordinated vehicles. Thus it is critical for the group of coordinated vehicles not to divide the group, or allow any intermediate vehicle in the group of vehicle, while this is not any big problem during conventional platooning.

It appears that further development is required for reaching practical implementation of vehicle groups.

### SUMMARY

It is therefore an object of this invention to solve at least some of the above problems and improve driving in a group of coordinated vehicles.

According to a first aspect of the invention, this objective is achieved by a method in a control unit. The method aims at keeping distances between vehicles in a group of coordinated vehicles within a distance interval. The method comprises transmitting a request for vehicle related information. Further, the method also comprises receiving the requested vehicle related information from the vehicles in the group. In addition the method further comprises determining a maximum allowed velocity, a maximum allowed acceleration and a maximum allowed retardation of the vehicles in the group, based on the vehicle related information received from each vehicle in the group, in order to keep the distances between the vehicles in the group within a distance interval. The method also comprises instructing each vehicle in the group not to exceed the determined maximum allowed velocity, maximum allowed acceleration and maximum allowed retardation.

According to a second aspect of the invention, this objective is achieved by a control unit. The control unit is configured for keeping distances between vehicles in a group of coordinated vehicles within a distance interval. Further the control unit is configured for transmitting a request for vehicle related information. The control unit is also configured for receiving the requested vehicle related information from vehicles in the group. In addition the control unit is configured for determining a maximum allowed velocity, a maximum allowed acceleration and a maximum allowed retardation of the vehicles in the group, based on the vehicle related information received from each vehicle in the group, in order to keep the distances between the vehicles in the group within a distance interval; and instructing each vehicle in the group not to exceed the determined maximum allowed velocity, maximum allowed acceleration and maximum allowed retardation.

Thanks to the described aspects, by determining the maximum capacity of all the vehicles in a coordinated group of vehicles in terms of velocity, acceleration and retardation of vehicles in the group and setting the maximum velocity, acceleration and retardation of all the vehicles in the group to the maximum velocity, acceleration and retardation, respectively, of the vehicle having the lowest maximum velocity, acceleration and retardation.

Thereby, it is assured that the group of vehicles is not divided by any interceptive vehicles not belonging to the coordinated group. Further, it is assured that no accident between vehicles in the coordinated group of vehicles occur. In addition, passage comfort and safety is assured by adapting the velocity, acceleration and retardation to the situation in the passenger department (regarding standing passengers, wheelchairs, baby sitters etc.).

Other advantages and additional novel features will become apparent from the subsequent detailed description.

### FIGURES

Embodiments of the invention will now be described in further detail with reference to the accompanying figures, in which:
- **Figure 1**: illustrates an embodiment of a group of coordinated vehicles;
- **Figure 2A**: illustrates a vehicle interior according to an embodiment;
- **Figure 2B**: illustrates a vehicle interior and a vehicle external structure according to an embodiment;
- **Figure 3A**: illustrates a group of coordinated vehicles and a minimum distance between them;
- **Figure 3B**: illustrates a group of coordinated vehicles and a maximum distance between them;
- **Figure 4**: is a flow chart illustrating an embodiment of the method;
- **Figure 5**: is an illustration depicting a system according to an embodiment.

### DETAILED DESCRIPTION

Embodiments of the invention described herein are defined as a control unit and a method in a control unit, which may be put into practice in the embodiments described below. These embodiments may, however, be exemplified and realised in many different forms and are not to be limited to the examples set forth herein; rather, these illustrative examples of embodiments are provided so that this disclosure will be thorough and complete.

Still other objects and features may become apparent from the following detailed description, considered in conjunction with the accompanying drawings. It is to be understood, however, that the drawings are designed solely for purposes of illustration and not as a definition of the limits of the herein disclosed embodiments, for which reference is to be made to the appended claims. Further, the drawings are not necessarily drawn to scale and, unless otherwise indicated, they are merely intended to conceptually illustrate the structures and procedures described herein.

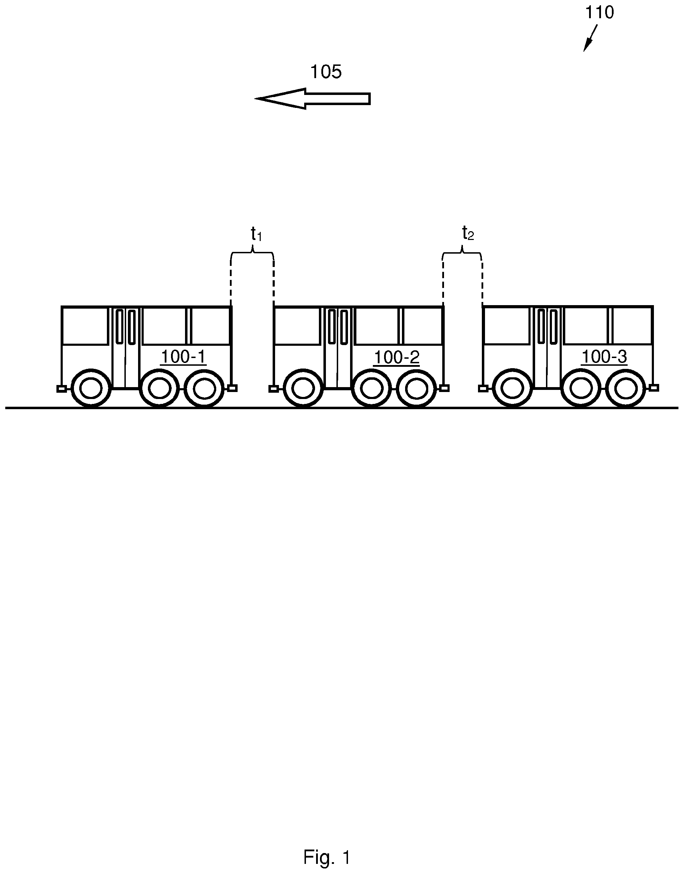

**Figure 1** illustrates a scenario wherein a number of vehicles **100-1, 100-2, 100-3,** driving in a driving direction **105,** with an inter-vehicular distances **t₁, t₂.** The vehicles 100-1, 100-2, 100-3 are coordinated and organised in a group 110 of coordinated vehicles 100-1, 100-2, 100-3.

The vehicle group 110 may be described as a chain of coordinated, inter-communicating vehicles 100-1, 100-2, 100-3 travelling at given inter-vehicular distances t₁, t₂ and velocity. The inter-vehicular distances t₁, t₂ may be the same between all vehicles 100-1, 100-2, 100-3 in some embodiments. In other embodiments, the inter-vehicular distances t₁, t₂ may be different for different vehicles 100-1, 100-2, 100-3. Further, the inter-vehicular distances t₁, t₂ may be fixed or variable in different embodiments. Thus the distances t₁, t₂ may be e.g. some centimetres, some decimetres, some meters or some tenths of meters in some embodiments. Alternatively, each vehicle 100-1, 100-2, 100-3 in the group 110 may have a different distance t₁, t₂ to the vehicle following, or leading, vehicle 100-1, 100-2, 100-3, than all other vehicles 100-1, 100-2, 100-3 in the coordinated group 110.

The vehicles 100-1, 100-2, 100-3 may comprise e.g. a multi-passenger vehicle such as a bus, a coach or any similar vehicle or other means of conveyance such as a truck or a car etc. In some embodiments, the vehicles 100-1, 100-2, 100-3 may be running on rails, and have a train/ wagon relationship when organised in the group 110, like a tram, subway or other similar means for public transport.

The vehicles 100-1, 100-2, 100-3 in the group 110 may comprise vehicles of the same, or different types in different embodiments.

Any, some or all of the vehicles 100-1, 100-2, 100-3 may be driver controlled or driverless autonomously controlled vehicles in different embodiments. However, for enhanced clarity, the vehicles 100-1, 100-2, 100-3 are subsequently described as having a driver, at least in the leading vehicle 100-1.

The vehicles 100-1, 100-2, 100-3 in the group 110 are coordinated via wireless signal. Such wireless signal may comprise, or at least be inspired by wireless communication technology such as Wi-Fi, Wireless Local Area Network (WLAN), Ultra Mobile Broadband (UMB), Bluetooth (BT), Near Field Communication (NFC), Radio-Frequency Identification (RFID), optical communication such as Infrared Data Association (IrDA) or infrared transmission to name but a few possible examples of wireless communications in some embodiments.

In some embodiments, the communication between vehicles 100-1, 100-2, 100-3 in the group 110 may be performed via vehicle-to-vehicle (V2V) communication, e.g. based on Dedicated Short-Range Communications (DSRC) devices. DSRC works in 5.9 GHz band with bandwidth of 75 MHz and approximate range of 1000 m in some embodiments.

The wireless communication may be made according to any IEEE standard for wireless vehicular communication like e.g. a special mode of operation of IEEE 802.11 for vehicular networks called Wireless Access in Vehicular Environments (WAVE). IEEE 802.11p is an extension to 802.11 Wireless LAN medium access layer (MAC) and physical layer (PHY) specification.

In some embodiments, when the vehicles 100-1, 100-2, 100-3 in the group 110 are coordinated and are communicating, the driver of the first vehicle 100-1 drive the own vehicles 100-1 and the other vehicles 100-2, 100-3 in the group 110 are merely following the driving commands of the first vehicle 100-1.

The distances t₁, t₂ between the coordinated vehicles 100-1, 100-2, 100-3 are kept within a distance interval t₀ - tₘₐₓ. It is thereby assured that the vehicles 100-1, 100-2, 100-3 of the group 110 keep and maintain the minimum distance to to avoid any accidents while at the same time keep the maximum distance tₘₐₓ for avoiding that the group 110 is split up and that any other vehicle or road user is situated in the distance interval t₁, t₂ between the vehicles 100-1, 100-2, 100-3.

In some embodiments, to may be identical with tₘₐₓ.

This may be made by collecting vehicle related information from the vehicles 100-1, 100-2, 100-3 in the group 110 and, based thereupon determine a maximum allowed velocity, a maximum allowed acceleration and a maximum allowed retardation of the vehicles 100-1, 100-2, 100-3 in the group 110, based on the vehicle related information received from each vehicle 100-1, 100-2, 100-3 in the group 110, in order to keep the distances t₁, t₂ between the vehicles 100-1, 100-2, 100-3 in the group 110 within a distance interval t₀ -tₘₐₓ. Each vehicle 100-1, 100-2, 100-3 in the group 110 is then instructed not to exceed the determined maximum allowed velocity, maximum allowed acceleration and maximum allowed retardation.

The collected vehicle related information may comprise e.g. total weight of each vehicle 100-1, 100-2, 100-3; available momentary and continuously engine capacity (and thereby capacity to accelerate); available momentary and continuously braking capacity; maximum allowed acceleration and/ or retardation of the own vehicle 100-1, 100-2, 100-3 based on information concerning detection of standing passengers, wheelchairs, baby carriages etc.; information concerning maximum velocity in curves where input may be taken from a calculated centre of gravity; information from the Electronic Stability Program (ESP) concerning adhesion of each vehicle 100-1, 100-2, 100-3 (as there may be tyres of different quality on different vehicles 100-1, 100-2, 100-3); distance to other vehicles behind/ in front of the own vehicle 100-1, 100-2, 100-3.

Thereby, a common maximum velocity, maximum acceleration and maximum retardation is determined, which is possible to keep for all of the vehicles 100-1, 100-2, 100-3 in the group 110. It may thereby be ascertained that the group 110 is kept together, or that no collision occurs. Further, passenger comfort is enhanced, independently of which vehicle 100-1, 100-2, 100-3 the passenger is situated in.

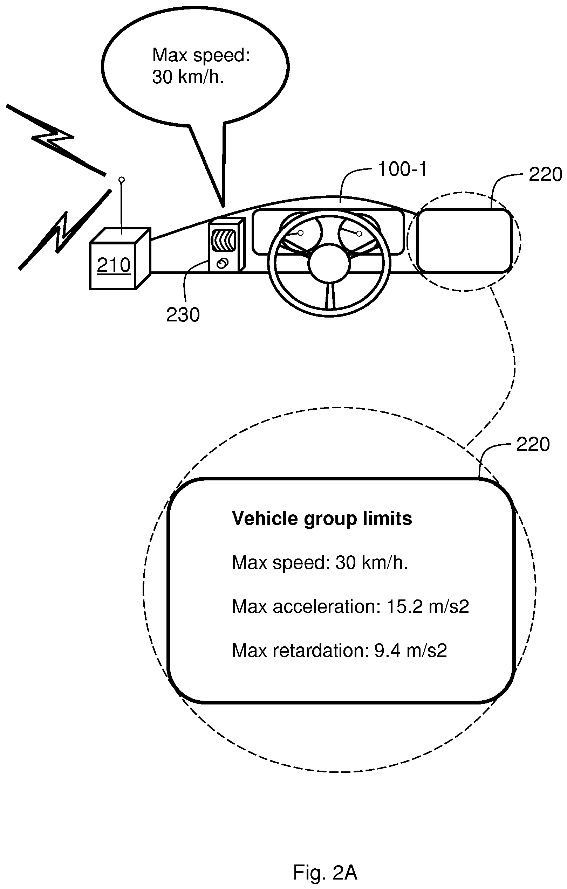

**Figure 2A** illustrates an example of a scenario as it may be perceived by the driver of the vehicle 100-1, i.e. the first vehicle 100-1 in the group 110 of coordinated vehicles 100-1, 100-2, 100-3.

The vehicle 100-1 comprises a control unit **210** wherein computations and calculations of driving parameters of the vehicles 100-1, 100-2, 100-3 in the group 110.

Communication is made over a wireless interface with the other vehicles 100-1, 100-2, 100-3 in the group 110. Thereby information is collected from the other vehicles 100-1, 100-2, 100-3 and maximum allowed velocity, maximum allowed acceleration and maximum allowed retardation of the vehicles 100-1, 100-2, 100-3 is determined based thereupon.

As the maximum allowed velocity, maximum allowed acceleration and maximum allowed retardation have been determined, these driving limitations may then be presented visually to the driver, e.g. on a display **220,** such as e.g. a display on the dashboard, a head up display, intelligent glasses of the driver etc. Alternatively, the driving limitations may be presented auditive by a loudspeaker **230.**

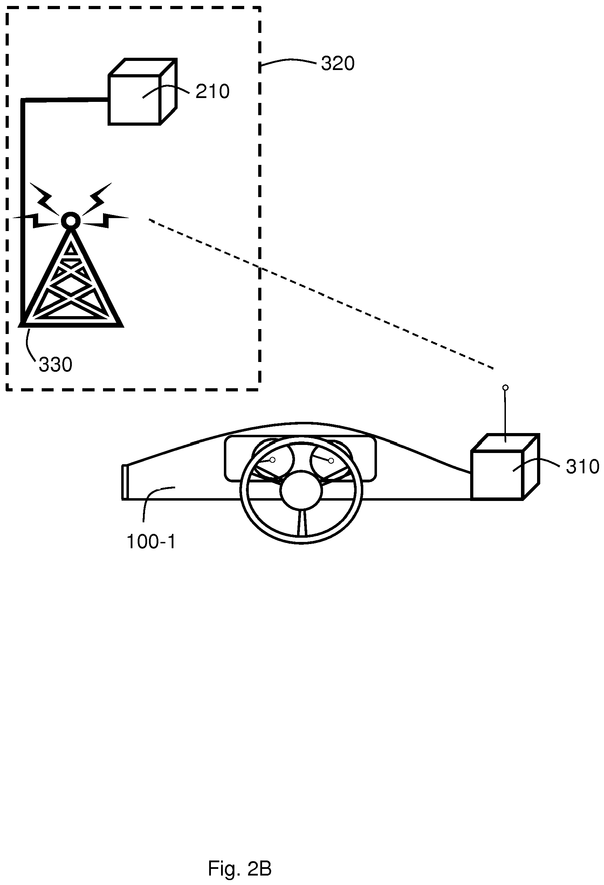

**Figure 2B** illustrates an example of a scenario similar to the one previously illustrated in Figure 2A, but wherein the control unit 210 is situated in a vehicle external structure **320.** The vehicles 100-1, 100-2, 100-3 in the group 110 may communicate over a wireless interface via a transceiver **310** communicating with the control unit 210 in the vehicle external structure 320 via another communication device **330** of the vehicle external structure 320.

The vehicle 100-1 may be the same or similar to the previously discussed vehicle 100-1 presented in Figure 2A. However, it is here illustrated how a vehicle external structure 320 may communicate with the vehicle 100-1. The transceiver 310 in the vehicle 100-1 may communicate with the control unit 210 of the vehicle external structure 320 via wireless communication based on e.g. any of the previously discussed wireless communication technologies. The vehicle external structure 320 comprises, or is connected to a transceiver 330.

The communication may alternatively be made over a wireless interface comprising, or at least being inspired by radio access technologies such as e.g. 3GPP LTE, LTE-Advanced, E-UTRAN, UMTS, GSM, GSM/ EDGE, WCDMA, Time Division Multiple Access (TDMA) networks, Frequency Division Multiple Access (FDMA) networks, Orthogonal FDMA (OFDMA) networks, Single-Carrier FDMA (SC-FDMA) networks, Worldwide Interoperability for Microwave Access (WiMax), or Ultra Mobile Broadband (UMB), High Speed Packet Access (HSPA) Evolved Universal Terrestrial Radio Access (E-UTRA), Universal Terrestrial Radio Access (UTRA), GSM EDGE Radio Access Network (GERAN), 3GPP2 CDMA technologies, e.g., CDMA2000 1x RTT and High Rate Packet Data (HRPD), or similar, just to mention some few options, via a wireless communication network.

Thereby, the control unit 210 in the vehicle external structure 320 may determine maximum allowed velocity, maximum allowed acceleration and/ or maximum allowed retardation of the vehicles 100-1, 100-2, 100-3 in the group 110, based on the vehicle related information received from each vehicle 100-1, 100-2, 100-3 in the group 110, in order to keep the distances t₁, t₂ between the vehicles 100-1, 100-2, 100-3 in the group 110 within a distance interval to -tₘₐₓ. Having made that, the control unit 210 may instruct each vehicle 100-1, 100-2, 100-3 in the group 110 not to exceed the determined maximum allowed velocity, maximum allowed acceleration and maximum allowed retardation.

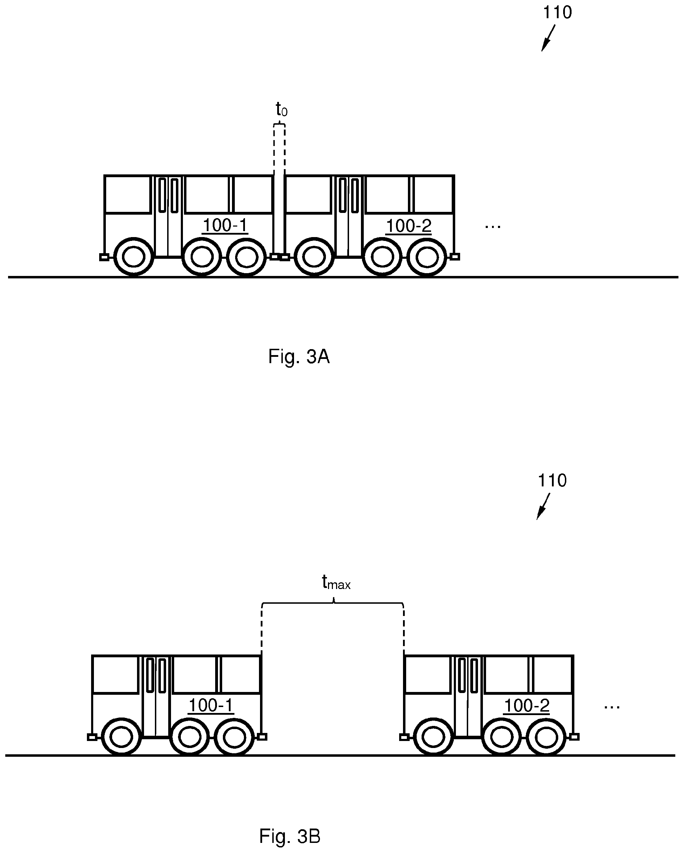

**Figure 3A** illustrates a group of coordinated vehicles 100-1, 100-2, 100-3 and the minimum distance t₀ between them when the vehicles 100-1, 100-2, 100-3 are stationary.

According to some embodiments, the distances t₁, t₂ between the vehicles 100-1, 100-2, 100-3 in the group 110 may be dependent on the velocity of the group 110. Thus the distances t₁, t₂ may be shortened, e.g. to less than one meter, when the vehicles 100-1, 100-2, 100-3 are stationary.

An advantage therewith is that it is avoided that passengers, or other people, try to take a short cut between the vehicles 100-1, 100-2, 100-3, which presents a security problem.

**Figure 3B** illustrates a group of coordinated vehicles 100-1, 100-2, 100-3 and the maximum distance tₘₐₓ between them when the vehicles 100-1, 100-2, 100-3 are moving at high speed.

The illustrated embodiment in Figure 3B thus illustrates the same embodiment as in Figure 3A, but driving at high velocity. When driving at high velocity, the retardation distance required to brake the vehicles 100-1, 100-2, 100-3 increases and also differences in retardation distances between vehicles 100-1, 100-2, 100-3 having different braking capacities increases. Thus a certain safety margin may be applied with particular advantage in high velocity.

The inter-vehicular distances t₁, t₂ may in some embodiments be allowed to variate between the minimum distance to and the maximum distance tₘₐₓ, e.g. based on velocity.

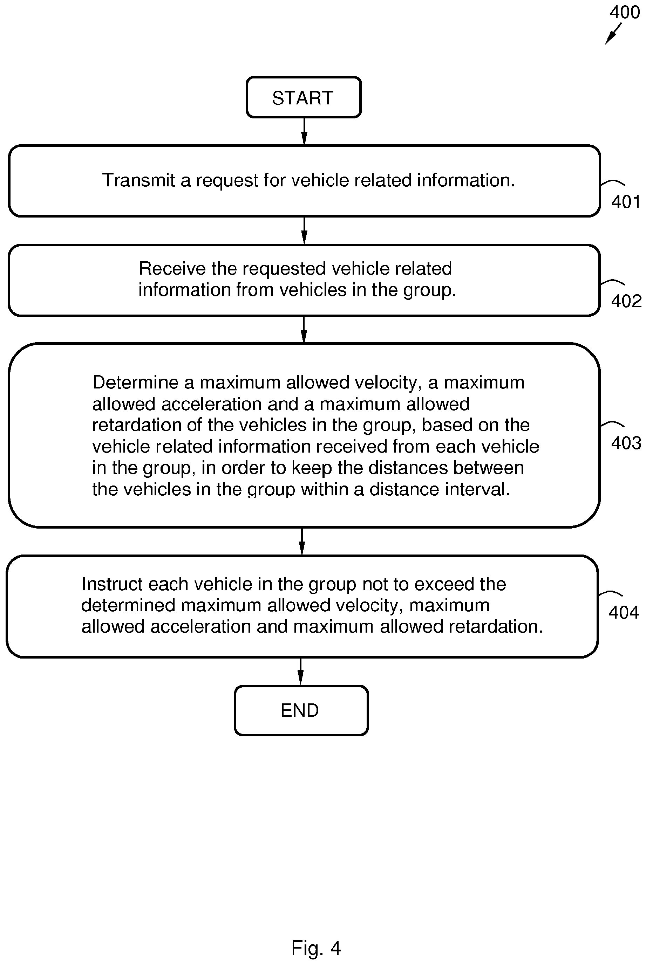

**Figure 4** illustrates an example of a method **400** according to an embodiment. The flow chart in Figure 4 shows the method 400 in a control unit 210. The control unit 210 may be situated in a vehicle 100-1, comprised in a group 110 of coordinated vehicles 100-1, 100-2, 100-3 in a formation, i.e. one vehicle after another in a queue sequence. In other embodiments, the control unit 210 may be situated in a vehicle external structure 320.

The method aims at keeping distances t₁, t₂ between vehicles 100-1, 100-2, 100-3 in the group 110 of coordinated vehicles 100-1, 100-2, 100-3 within a distance interval to -tₘₐₓ.

The vehicles 100-1, 100-2, 100-3 in the coordinated group 110 may be any arbitrary kind of means for conveyance. However, in some particular embodiments, the vehicles 100-1, 100-2, 100-3 may be vehicles for public transportation of passengers such as busses, trains, trams, monorails or similar.

In order to correctly be able to keep the formation of the group 110 and keeping the distances t₁, t₂ between vehicles 100-1, 100-2, 100-3 in the group 110 of coordinated vehicles 100-1, 100-2, 100-3 within the distance interval t₀ -tₘₐₓ, the method 400 may comprise a number of steps **401-404.** Further, the described steps 401-404 may be performed in a somewhat different chronological order than the numbering suggests. The method 400 may comprise the subsequent steps:
**Step 401** comprises transmitting a request for vehicle related information.

The requested vehicle related information may comprise e.g. weight of the vehicle 100-1, 100-2, 100-3; engine power at the driving wheels; total braking capacity; maximum allowed acceleration/ retardation of the vehicle 100-1, 100-2, 100-3 based on passenger information; information related to maximum allowed velocity when turning, due to maximum allowed lateral acceleration; centre of gravity; information related to traction and/ or current distance t₁, t₂ to ambient vehicles 100-1, 100-2, 100-3 in the group 110.

The requested vehicle related information may in some embodiments comprise: a maximum allowed velocity, a maximum allowed acceleration and a maximum allowed retardation of each respective vehicle 100-1, 100-2, 100-3 in the group 110. This may be made in embodiments wherein calculations are made at each vehicle 100-1, 100-2, 100-3.

**Step 402** comprises receiving the requested vehicle related information from the vehicles 100-1, 100-2, 100-3 in the group 110.

**Step 403** comprises determining a maximum allowed velocity, a maximum allowed acceleration and a maximum allowed retardation of the vehicles 100-1, 100-2, 100-3 in the group 110, based on the vehicle related information received 402 from each vehicle 100-1, 100-2, 100-3 in the group 110, in order to keep the distances t₁, t₂ between the vehicles 100-1, 100-2, 100-3 in the group 110 within a distance interval to -tₘₐₓ.

The maximum allowed velocity of the vehicles 100-1, 100-2, 100-3 in the group 110 may be determined to be the maximum velocity of the vehicle 100-1, 100-2, 100-3 with the lowest maximum velocity in the group 110. Further, the maximum allowed acceleration of the vehicles 100-1, 100-2, 100-3 in the group 110 may be determined to be the maximum acceleration of the vehicle 100-1, 100-2, 100-3 with the lowest maximum acceleration in the group 110. In addition, the maximum allowed retardation of the vehicles 100-1, 100-2, 100-3 in the group 110 may be determined to be the maximum retardation of the vehicle 100-1, 100-2, 100-3 with the lowest maximum retardation in the group 110.

In some embodiments, the inter vehicular distances t₁, t₂ as well as maximum allowed velocity, maximum allowed acceleration and/ or a maximum allowed retardation may be adjusted based on a detection of standing passengers in any of the coordinated vehicles 100-1, 100-2, 100-3 in the group 110. Standing passengers may be detected by one or several sensors in the vehicles 100-1, 100-2, 100-3 comprised in the group 110. Thus, the maximum allowed velocity, maximum allowed acceleration and/ or a maximum allowed retardation may be decreased, and/ or the inter-vehicular distances t₁, t₂ may be increased when standing passengers and/ or wheelchairs.

Alternatively, in some embodiments, the number of passengers entering the respective vehicles 100-1, 100-2, 100-3 may be counted by a sensor at the respective vehicle entrance (or alternatively by keeping track of the number of sold tickets). The number of standing passengers may be estimated by knowing the number of seats and making a comparison with the number of entered passengers (making an assumption that most passengers prefer to sit, if it is possible), at each vehicle 100-1, 100-2, 100-3. Alternatively, seat sensors may be situated in the seats of the vehicles 100-1, 100-2, 100-3, and the number of seated passengers may be subtracted from the number of entered passengers.

The estimation may also, or alternatively be based on detection of wheel chairs and/ or baby carriages in any of the vehicles 100-1, 100-2, 100-3 of the group 110.

Further, belt sensors at the seats may be used for detecting if the seated passengers are belted. In case all passengers are belted, the maximum velocity, maximum acceleration and maximum retardation may be increased in some embodiments.

Thus, in case all passengers are seated and belted, an increase of maximum velocity/ acceleration/ retardation may be allowed. In case all passengers are seated but not belted, a more modest increase of maximum velocity/ acceleration/ retardation may be applied while sudden velocity increase (as well as sudden braking) may be avoided when there are standing passengers in any of the vehicles 100-1, 100-2, 100-3.

**Step 404** comprises instructing each vehicle 100-1, 100-2, 100-3 in the group 110 not to exceed the determined 403 maximum allowed velocity, maximum allowed acceleration and maximum allowed retardation.

The maximum allowed acceleration/ retardation of the vehicle 100-1, 100-2, 100-3 may be based on passenger information and/ or information related to maximum allowed velocity when turning, due to maximum allowed lateral acceleration, may be determined based on a detection of standing passengers, wheel chairs and/ or baby carriage in the respective vehicle 100-1, 100-2, 100-3.

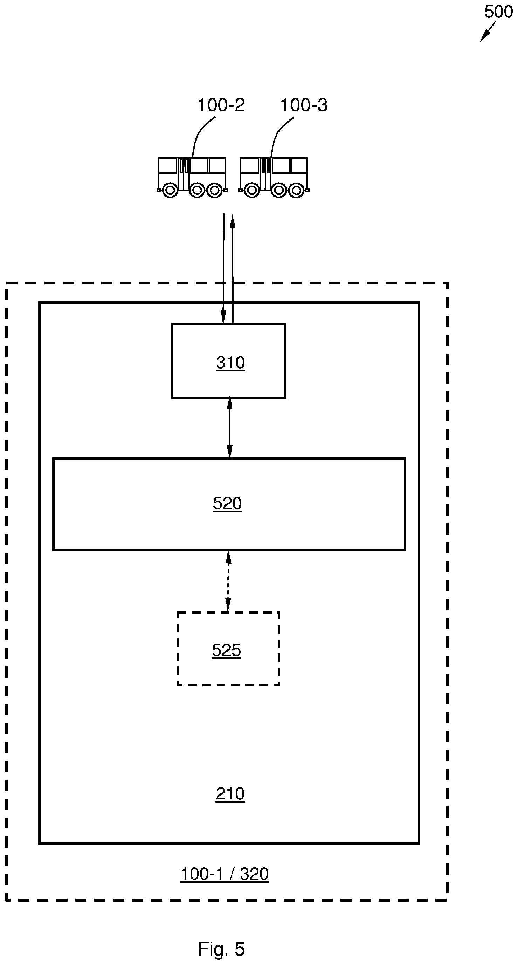

**Figure 5** illustrates an embodiment of a system **500.** The system 500 is configured for keeping distances t₁, t₂ between vehicles 100-1, 100-2, 100-3 in a group 110 of coordinated vehicles 100-1, 100-2, 100-3 within a distance interval to -tₘₐₓ. The system 500 comprises a transceiver 310 for transmitting/ receiving vehicle related information. Further, the system 500 also comprises a control unit 210. The control unit 210 may be situated in a vehicle 100-1, comprised in a group 110 of coordinated vehicles 100-1, 100-2, 100-3 in a formation, i.e. one vehicle after another in a queue sequence. In other embodiments, the control unit 210 may be situated in a vehicle external structure 320.

The control unit 210 aims at keeping distances t₁, t₂ between vehicles 100-1, 100-2, 100-3 in the group 110 of coordinated vehicles 100-1, 100-2, 100-3 within a distance interval t₀-tₘₐₓ, according to at least some of the previously described steps 401-404 according to the method 400 described above and illustrated in Figure 4.

The control unit 210 is configured for keeping distances t₁, t₂ between vehicles 100-1, 100-2, 100-3 in a group 110 of coordinated vehicles 100-1, 100-2, 100-3 within a distance interval to -tₘₐₓ. The control unit 210 is configured for: transmitting a request for vehicle related information; receiving the requested vehicle related information from vehicles 100-1, 100-2, 100-3 in the group 110. Further, the control unit 210 is also configured for determining a maximum allowed velocity, a maximum allowed acceleration and a maximum allowed retardation of the vehicles 100-1, 100-2, 100-3 in the group 110, based on the vehicle related information received from each vehicle 100-1, 100-2, 100-3 in the group 110, in order to keep the distances t₁, t₂ between the vehicles 100-1, 100-2, 100-3 in the group 110 within a distance interval to -tₘₐₓ. Additionally, the control unit 210 is furthermore configured for instructing each vehicle 100-1, 100-2, 100-3 in the group 110 not to exceed the determined maximum allowed velocity, maximum allowed acceleration and maximum allowed retardation.

According to some embodiments, the control unit 210 may be configured for determining the maximum allowed velocity of the vehicles 100-1, 100-2, 100-3 in the group 110 to be the maximum velocity of the vehicle 100-1, 100-2, 100-3 with the lowest maximum velocity in the group 110. Further, the control unit 210 may be configured for determining the maximum allowed acceleration of the vehicles 100-1, 100-2, 100-3 in the group 110 may be determined to be the maximum acceleration of the vehicle 100-1, 100-2, 100-3 with the lowest maximum acceleration in the group 110. In addition, the control unit 210 may be configured for determining the maximum allowed retardation of the vehicles 100-1, 100-2, 100-3 in the group 110 may be determined to be the maximum retardation of the vehicle 100-1, 100-2, 100-3 with the lowest maximum retardation in the group 110.

The requested vehicle related information may comprise e.g. weight of the vehicle 100-1, 100-2, 100-3; engine power at the driving wheels; total braking capacity; maximum allowed acceleration/ retardation of the vehicle 100-1, 100-2, 100-3 based on passenger information; information related to maximum allowed velocity when turning, due to maximum allowed lateral acceleration; centre of gravity; information related to traction and/ or current distance t₁, t₂ to ambient vehicles 100-1, 100-2, 100-3 in the group 110.

The requested vehicle related information may in some embodiments comprise: a maximum allowed velocity, a maximum allowed acceleration and a maximum allowed retardation of each respective vehicle 100-1, 100-2, 100-3 in the group 110. This may be made in embodiments wherein calculations are made at each vehicle 100-1, 100-2, 100-3.

The maximum allowed acceleration/ retardation of the vehicle 100-1, 100-2, 100-3 may be based on passenger information and/ or information related to maximum allowed velocity when turning, due to maximum allowed lateral acceleration, may be determined based on a detection of standing passengers, wheel chairs and/ or baby carriage in the respective vehicle 100-1, 100-2, 100-3.

The control unit 210 comprises a transceiver 310 configured for communication with other vehicles 100-1, 100-2, 100-3 in the group 110 of coordinated vehicles 100-1, 100-2, 100-3. The transceiver 310 may further be configured for communication with the vehicle external structure 320 in some embodiments.

The control unit 210 further comprises a processor **520** configured for performing various calculations and computations in order to perform the method 400, according to the previously described steps 401-404.

Such processor 520 may comprise one or more instances of a processing circuit, i.e. a Central Processing Unit (CPU), a processing unit, an Application Specific Integrated Circuit (ASIC), a microprocessor, or other processing logic that may interpret and execute instructions. The herein utilised expression "processor" may thus represent a processing circuitry comprising a plurality of processing circuits, such as, e.g., any, some or all of the ones enumerated above.

Furthermore, the control unit 210 may comprise a memory **525** in some embodiments. The optional memory 525 may comprise a physical device utilised to store data or programs, i.e., sequences of instructions, on a temporary or permanent basis. According to some embodiments, the memory 525 may comprise integrated circuits comprising silicon-based transistors. The memory 525 may comprise e.g. a memory card, a flash memory, a USB memory, a hard disc, or another similar volatile or non-volatile storage unit for storing data such as e.g. ROM (Read-Only Memory), PROM (Programmable Read-Only Memory), EPROM (Erasable PROM), EEPROM (Electrically Erasable PROM), etc. in different embodiments. The previously described steps 401-404 to be performed in the control unit 210 may be implemented through the one or more processors 520 within the control unit 210, together with computer program product for performing at least some of the functions of the steps 401-404. Thus a computer program product, comprising instructions for performing the steps 401 - 404 in the control unit 210 may perform the method 400 comprising at least some of the steps 401-404 for keeping distances t₁, t₂ between vehicles 100-1, 100-2, 100-3 in a group 110 of coordinated vehicles 100-1, 100-2, 100-3 within a distance interval to - tₘₐₓ, when the computer program is loaded into the one or more processors 520 of the control unit 210. The described steps 401-404 thus may be performed by a computer algorithm, a machine executable code, a non-transitory computer-readable medium, or a software instructions programmed into a suitable programmable logic such as the processor 520 in the control unit 210.

The computer program product mentioned above may be provided for instance in the form of a data carrier carrying computer program code for performing at least some of the step 401-404 according to some embodiments when being loaded into the one or more processors 520 of the control unit 210. The data carrier may be, e.g., a hard disk, a CD ROM disc, a memory stick, an optical storage device, a magnetic storage device or any other appropriate medium such as a disk or tape that may hold machine readable data in a non-transitory manner. The computer program product may furthermore be provided as computer program code on a server and downloaded to the control unit 210 remotely, e.g., over an Internet or an intranet connection.

Further, some embodiments may comprise a vehicle 100-1, comprised in the group 110 of coordinated vehicles 100-1, 100-2, 100-3, comprising the control unit 210, configured for keeping distances t₁, t₂ between vehicles 100-1, 100-2, 100-3 in a group 110 of coordinated vehicles 100-1, 100-2, 100-3 within a distance interval to -tₘₐₓ.

Further, some embodiments may comprise a vehicle external structure 320, comprised in the group 110 of coordinated vehicles 100-1, 100-2, 100-3, comprising the control unit 210, configured for keeping distances t₁, t₂ between vehicles 100-1, 100-2, 100-3 in a group 110 of coordinated vehicles 100-1, 100-2, 100-3 within a distance interval to -tₘₐₓ.

The terminology used in the description of the embodiments as illustrated in the accompanying drawings is not intended to be limiting of the described method 400, control unit 210; computer program, system 500, vehicle 100-1 and/ or vehicle external structure 320. Various changes, substitutions and/ or alterations may be made, without departing from invention embodiments as defined by the appended claims.

As used herein, the term "and/ or" comprises any and all combinations of one or more of the associated listed items. The term "or" as used herein, is to be interpreted as a mathematical OR, i.e., as an inclusive disjunction; not as a mathematical exclusive OR (XOR), unless expressly stated otherwise. In addition, the singular forms "a", "an" and "the" are to be interpreted as "at least one", thus also possibly comprising a plurality of entities of the same kind, unless expressly stated otherwise. It will be further understood that the terms "includes", "comprises", "including" and/ or "comprising", specifies the presence of stated features, actions, integers, steps, operations, elements, and/ or components, but do not preclude the presence or addition of one or more other features, actions, integers, steps, operations, elements, components, and/ or groups thereof. A single unit such as e.g. a processor may fulfil the functions of several items recited in the claims. The mere fact that certain measures are recited in mutually different dependent claims does not indicate that a combination of these measures cannot be used to advantage. A computer program may be stored/ distributed on a suitable medium, such as an optical storage medium or a solid-state medium supplied together with or as part of other hardware, but may also be distributed in other forms such as via Internet or other wired or wireless communication system.

## Claims

1. A method (400) in a control unit (210) for keeping distances (t₁, t₂) between vehicles (100-1, 100-2, 100-3) in a group (110) of coordinated vehicles (100-1, 100-2, 100-3) within a distance interval (t₀ -tₘₐₓ), wherein the method (400) comprises:
transmitting (401) a request for vehicle related information;
receiving (402) the requested vehicle related information from the vehicles (100-1, 100-2, 100-3) in the group (110);
determining (403) a maximum allowed velocity, a maximum allowed acceleration and a maximum allowed retardation of the vehicles (100-1, 100-2, 100-3) in the group (110), based on the vehicle related information received (402) from each vehicle (100-1, 100-2, 100-3) in the group (110), in order to keep the distances (t₁, t₂) between the vehicles (100-1, 100-2, 100-3) in the group (110) within a distance interval (to -tₘₐₓ); and
instructing (404) each vehicle (100-1, 100-2, 100-3) in the group (110) not to exceed the determined (403) maximum allowed velocity, maximum allowed acceleration and maximum allowed retardation.

2. The method (400) according to claim 1, wherein the requested vehicle related information comprises: weight of the vehicle (100-1, 100-2, 100-3); engine power at the driving wheels; total braking capacity; maximum allowed acceleration/ retardation of the vehicle (100-1, 100-2, 100-3) based on passenger information; information related to maximum allowed velocity when turning, due to maximum allowed lateral acceleration; centre of gravity; information related to traction and/ or current distance (t₁, t₂) to ambient vehicles (100-1, 100-2, 100-3) in the group (110).

3. The method (400) according to claim 2, wherein maximum allowed acceleration/ retardation of the vehicle (100-1, 100-2, 100-3) is based on passenger information and/ or information related to maximum allowed velocity when turning, due to maximum allowed lateral acceleration is determined based on a detection of standing passengers, wheel chairs and/ or baby carriage in the respective vehicle (100-1, 100-2, 100-3).

4. The method (400) according to claim 1, wherein the requested vehicle related information comprises: a maximum allowed velocity, a maximum allowed acceleration and a maximum allowed retardation of each respective vehicle (100-1, 100-2, 100-3) in the group (110).

5. The method (400) according to any of claims 1-4, wherein
the maximum allowed velocity of the vehicles (100-1, 100-2, 100-3) in the group (110) is determined (403) to be the maximum velocity of the vehicle (100-1, 100-2, 100-3) with the lowest maximum velocity in the group (110);
the maximum allowed acceleration of the vehicles (100-1, 100-2, 100-3) in the group (110) is determined (403) to be the maximum acceleration of the vehicle (100-1, 100-2, 100-3) with the lowest maximum acceleration in the group (110); and
the maximum allowed retardation of the vehicles (100-1, 100-2, 100-3) in the group (110) is determined (403) to be the maximum retardation of the vehicle (100-1, 100-2, 100-3) with the lowest maximum retardation in the group (110).

6. A control unit (210) for keeping distances (t₁, t₂) between vehicles (100-1, 100-2, 100-3) in a group (110) of coordinated vehicles (100-1, 100-2, 100-3) within a distance interval (to -tₘₐₓ), wherein the control unit (210) is configured for: transmitting a request for vehicle related information; receiving the requested vehicle related information from vehicles (100-1, 100-2, 100-3) in the group (110); determining a maximum allowed velocity, a maximum allowed acceleration and a maximum allowed retardation of the vehicles (100-1, 100-2, 100-3) in the group (110), based on the vehicle related information received from each vehicle (100-1, 100-2, 100-3) in the group (110), in order to keep the distances (t₁, t₂) between the vehicles (100-1, 100-2, 100-3) in the group (110) within a distance interval (t₀ -tₘₐₓ); and instructing each vehicle (100-1, 100-2, 100-3) in the group (110) not to exceed the determined maximum allowed velocity, maximum allowed acceleration and maximum allowed retardation.

7. The control unit (210) according to claim 6, further configured to determine the maximum allowed velocity of the vehicles (100-1, 100-2, 100-3) in the group (110) to be the maximum velocity of the vehicle (100-1, 100-2, 100-3) with the lowest maximum velocity in the group (110); and also configured to determine the maximum allowed acceleration of the vehicles (100-1, 100-2, 100-3) in the group (110) to be the maximum acceleration of the vehicle (100-1, 100-2, 100-3) with the lowest maximum acceleration in the group (110); and further configured to determine the maximum allowed retardation of the vehicles (100-1,100-2, 100-3) in the group (110) to be the maximum retardation of the vehicle (100-1, 100-2, 100-3) with the lowest maximum retardation in the group (110).
information related to maximum allowed velocity when turning, due to maximum allowed lateral acceleration is determined based on a detection of standing passengers, wheel chairs and/ or baby carriage in the respective vehicle (100-1, 100-2, 100-3).

8. A system (500) for keeping distances (t₁, t₂) between vehicles (100-1, 100-2, 100-3) in a group (110) of coordinated vehicles (100-1, 100-2, 100-3) within a distance interval (to -tₘₐₓ), wherein the system (500) comprises:
a control unit (210) according to claim 6 or claim 7; and
a transceiver (310) for transmitting/ receiving vehicle related information.

9. A computer program comprising program code for performing a method (400) according to any of claims 1-5, when the computer program is executed in a control unit (210) according to any of claim 6 or claim 7.

10. A vehicle (100-1) in a group (110) of coordinated vehicles (100-1, 100-2, 100-3), comprising a control unit (210) according to any of claim 6 or claim 7.

11. A vehicle external structure (320) comprising a control unit (210) according to any of claim 6 or claim 7.
